# FASCICULE DE BREVET EUROPEEN

(11) **EP 4 208 023 B1**
(45) Date de publication et mention de la délivrance du brevet: **11.02.2026**
(21) Numéro de dépôt: 21770005.3
(22) Date de dépôt: 01.09.2021
(51) Int. Cl.: A23B 2/70, A23B 2/742

(54) **PROCÉDÉ DE PROTECTION DE PRODUITS VÉGÉTAUX PENDANT LE TRANSPORT, DISPOSITIF DE TRAITEMENT CORRESPONDANT**
VERFAHREN ZUM SCHUTZ VON PFLANZENPRODUKTEN WÄHREND DES TRANSPORTS UND ENTSPRECHENDE BEHANDLUNGSVORRICHTUNG
METHOD FOR PROTECTING PLANT PRODUCTS DURING TRANSPORT, AND CORRESPONDING TREATMENT DEVICE

(30) Priorité: 02.09.2020 FR 2008920
(43) Date de publication de la demande: 12.07.2023
(73) Titulaire: Xeda International, 13670 Saint Andiol (FR)
(72) Inventeur: SARDO, Alberto, 13160 CHATEAURENARD (FR)
(74) Mandataire: Lavoix
(86) Numéro de dépôt international: PCT/EP2021/074155
(87) Numéro de publication internationale: WO 2022/049139

(56) Documents cités:
- EP-A2- 2 301 357
- FR-A1- 2 923 356
- US-A- 5 918 537
- ANONYMOUS: "DIY - Aroma Stone for Essential Oils - Shabby Art Boutique", 22 November 2016 (2016-11-22), XP055796344, Retrieved from the Internet <URL:https://www.shabbyartboutique.com/2016/11/diy-aroma-stone-for-essential-oils.html> [retrieved on 20210416]
- ANONYMOUS: "Sleep Stones Fragrant Pumice Stones 100g Bag (approx.): Amazon.co.uk: Health & Personal Care", 14 June 2011 (2011-06-14), XP055796343, Retrieved from the Internet <URL:https://www.amazon.co.uk/Sleep-Stones-Fragrant-Pumice-approx/dp/B00OEAQ8TO> [retrieved on 20210416]
- HARTMANS K J ET AL: "The use of carvone in agriculture: sprout suppression of potatoes and antifungal activity against potato tuber and other plant diseases", INDUSTRIAL CROPS AND PRODUCTS, ELSEVIER, NL, vol. 4, 1 January 1995 (1995-01-01), pages 3 - 13, XP002479803, ISSN: 0926-6690, DOI: 10.1016/0926-6690(95)00005-W
- ANONYMOUS: "Produits anti-germinatifs pour pommes de terre de consommation", 11 December 2017 (2017-12-11), XP055796345, Retrieved from the Internet <URL:https://www.terre-net.fr/observatoire-technique-culturale/strategie-technique-culturale/article/les-strategies-de-lutte-contre-la-germination-au-stockage-des-pommes-de-terre-217-133058.html> [retrieved on 20210416]

## Description

La présente invention concerne en général le transport de produits végétaux sur de longues distances, à l'intérieur d'enceintes de grands volumes.

L'invention est définie par les revendications 1-11 annexées.

Les produits végétaux tels que les pommes de terre peuvent être transportées sur de longues distances entre les zones de production et les zones de consommation. Ce transport dure par exemple entre 20 et 30 jours, et il est nécessaire d'appliquer un traitement phyto-protecteur pendant une période suffisamment longue pour garantir la qualité des produits livrés aux consommateurs.

Dans le cas de pommes de terre, il est connu d'utiliser un produit anti-germinatif de synthèse solide, le chlorpropham pour protéger les pommes de terre pendant le transport.

Du fait d'évolutions règlementaires, ces produits anti-germinatifs de synthèse solides sont maintenant interdits.

Il existe donc un besoin pour un procédé permettant de transporter des produits végétaux sur de longues distances, tout en assurant un traitement phyto-sanitaire sur une longue durée, garantissant la qualité des produits à l'arrivée.

La demande de brevet US5918537 décrit un dispositif destiné à libérer lentement des vapeurs d'un inhibiteur de germination dans un petit emballage de pommes de terre. Le dispositif comprend un récipient destiné à contenir un milieu poreux finement particulaire qui a absorbé un inhibiteur de germination liquide. Le récipient est au moins partiellement poreux aux vapeurs d'inhibiteur de germination, de sorte que le dispositif peut être utilisé pour empêcher la germination des pommes de terre dans de petits emballages pendant le transport. ¶

L'article scientifique intitulé "The use of carvone in agriculture: sprout suppression of potatoes and antifungal activity against potato tuber and other plant diseases", publié dans Industrial Crops and Products en 1995 par K.J. Hartmans et al., décrit l'utilisation du carvone, un composé extrait de l'huile essentielle de carvi, comme inhibiteur de germination et agent antifongique pour les pommes de terre stockées. Les essais ont été réalisés dans des entrepôts de 15 tonnes, avec ventilation d'air extérieur, sur des périodes allant jusqu'à 274 jours.

Dans ce contexte, l'invention vise à proposer un procédé de protection de produits végétaux pendant le transport, le procédé comprenant :
- placer une masse de produits végétaux comprise entre 5 et 50 tonnes dans une enceinte de grand volume, l'enceinte présentant un volume compris entre 10 et 200 m³;
- transporter les dits produits végétaux dans ladite enceinte pendant une période comprise entre une semaine et deux mois, un traitement phytoprotecteur étant appliqué aux produits végétaux pendant au moins une partie de ladite période ;

le traitement étant appliqué en plaçant à l'intérieur de ladite enceinte une quantité d'un matériau minéral ou végétal poreux dans lequel est absorbé un liquide contenant au moins un produit de traitement, le produit de traitement étant une huile essentielle ou un constituant d'une huile essentielle;
le matériau minéral ou végétal poreux ayant une capacité d'absorption du liquide comprise entre 5% et 30% en poids à 20°C;
la vitesse d'évaporation du liquide absorbé dans le matériau minéral ou végétal poreux étant comprise entre 10 et 200 g par jour et par kg de liquide absorbé à une température adaptée pour la conservation des produits végétaux et à pression atmosphérique;
le matériau minéral ou végétal poreux étant disposé à l'intérieur d'au moins un contenant ajouré permettant une circulation d'une atmosphère interne de l'enceinte à travers le contenant ajouré au contact du matériau minéral ou végétal poreux.

Ainsi, le procédé vise le transport de produits végétaux en grande quantité, entre 5 et 30 tonnes par enceinte de transport. Il ne vise pas le transport de produits végétaux dans de petits emballages, ni le stockage de produits végétaux dans des enceintes de stockage de très grands volumes telles que des silos.

Il vise également un traitement phyto-protecteur appliqué pendant une période moyennement longue, entre une semaine et deux mois, et non un traitement phytoprotecteur de très longue durée (jusqu'à un an) du type appliqué à certains produits végétaux stockés dans des silos ou des chambres froides.

Le traitement phyto-protecteur est particulièrement adapté aux conditions énoncées ci-dessus, du fait du choix du matériau minéral ou végétal poreux utilisé.

Ce matériau minéral ou végétal poreux doit avoir une capacité d'absorption du liquide contenant l'huile essentielle qui soit suffisante. Si cette capacité d'absorption est insuffisante, il est nécessaire d'embarquer dans l'enceinte de transport un volume très important de matériaux minéral ou végétal poreux. Le matériau minéral ou végétal poreux occupe alors un espace significatif au sein de l'enceinte de transport, au détriment des produits végétaux. La quantité de produits végétaux qui peut être transportée est diminuée. Un grand volume de matériaux minéral ou végétal poreux est également contraignant à manipuler et couteux. En outre, le matériau minéral ou végétal poreux augmente la masse totale embarquée dans l'enceinte.

La vitesse d'évaporation du liquide absorbée dans le matériau minéral ou végétal poreux doit être suffisamment rapide pour rendre le traitement efficace. Elle doit permettre d'atteindre la concentration en vapeur d'huile essentielle dans l'atmosphère de l'enceinte pratiquement immédiatement. Si cette capacité d'évaporation est trop faible, il devient nécessaire d'embarquer dans l'enceinte de transport une quantité excessivement grande de matériaux minéral ou végétal poreux, avec les désavantages en terme de manutention, de coût, de volume occupé et de masse déjà mentionnés dessus.

La vitesse d'évaporation du liquide absorbée ne doit pas non plus être excessivement élevée, pour que le traitement phyto-sanitaire puisse durer pendant toute la période de transport.

Par ailleurs, de manière à assurer une diffusion du produit efficace, il ne doit pas exister d'obstacle interdisant une circulation de l'atmosphère interne de l'enceinte au contact du matériau minéral ou végétal poreux. Pour cela, il est nécessaire que le contenant soit ajouré, pour faciliter la circulation de la vapeur d'huile essentielle et de l'atmosphère interne de l'enceinte.

Le procédé de l'invention, du fait du choix approprié des moyens permettant de diffuser le produit de traitement, assure une conservation adéquate des produits végétaux pendant toute la durée du transport, au sein d'une enceinte de grand volume.

Le procédé peut en outre présenter une ou plusieurs des caractéristiques ci-dessous, considérées individuellement ou selon toutes les combinaisons techniquement possibles :
- l'enceinte est un conteneur ou un camion ;
- les produits végétaux sont choisis dans la liste suivante : pomacées tels que les pommes, fruits à noyaux, fruits tropicaux tels que les bananes, fruits rouges tels que les cerises et les fraises, fruits des bois tels que les myrtilles, pommes de terre, oignons, ail, patates douces, agrumes ;
- le ou chaque produit de traitement est choisi dans la liste suivante : l'huile essentielle : huile de menthe, huile de girofle, huile de rose, huile de thym, huile d'origan ; huile d'eucalyptus, huile de cannelle, huile de menthe poivrée. constituant d'une huile essentielle : L-carvone, eugénol, géraniol, thymol, carvacrol, la cinnamaldéhyde, l'eucalyptol, le menthol, la menthone, le limonène, le citronellol ;
- le matériau minéral ou végétal poreux est choisi dans la liste suivante : pierre ponce, pouzzolane, billes d'argile, cellulose, écorces de pin ;
- le ou chaque contenant ajouré présente un taux de vide par unité de surface supérieur à 20% ;
- le ou chaque contenant ajouré est choisi dans la liste suivante : sac en jute, sac en maille, filet, caisse ;
- le ou chaque contenant ajouré contient entre 1 et 20 kg de matériau minéral ou végétal poreux ;
- le matériau minéral ou végétal poreux est divisé en blocs de taille comprise entre 0,5 et 10 cm ;
- le procédé comporte une étape de chargement du matériau minéral ou végétal poreux en ledit liquide, l'étape de chargement comprenant les sous-étapes suivantes :
   - séchage du matériau minéral ou végétal poreux ;
   - imprégnation du liquide dans le matériau minéral ou végétal poreux.

Selon un second aspect, l'invention porte sur un dispositif pour le traitement de produits végétaux pendant un transport de longue durée, entre une semaine et deux mois, dans une enceinte de grand volume comprise entre 10 et 200 m³, comprenant :
- entre 1 et 20 kg d'un matériau minéral ou végétal poreux ;
- entre 0,1 kg et 6 kg d'un liquide absorbé dans le matériau minéral ou végétal poreux, le liquide contenant au moins un produit de traitement, le produit de traitement étant une huile essentielle ou un constituant d'une huile essentielle, le matériau minéral ou végétal poreux ayant une capacité d'absorption du liquide comprise entre 5% et 30% en poids à 20°C, la vitesse d'évaporation du liquide absorbé dans le matériau minéral ou végétal poreux étant comprise entre 10 et 200 g par jour et par kg de liquide absorbé à une température adaptée pour la conservation des produits végétaux et à pression atmosphérique;
- un contenant ajouré à l'intérieur duquel le matériau minéral ou végétal poreux est disposé, le contenant ajouré permettant une circulation d'une atmosphère à travers le contenant ajouré au contact du matériau minéral ou végétal poreux ;
- un suremballage étanche vis-à-vis dudit liquide et des vapeurs du produit de traitement, dans lequel est placé le contenant ajouré contenant le matériau minéral ou végétal poreux.

L'utilisation d'un suremballage étanche vis-à-vis du liquide et des vapeurs de la ou chaque huile essentielle permet une conservation adéquate du matériau minéral ou végétal poreux chargé en liquide avant que celui-ci soit embarqué dans l'enceinte de transport. Au moment du chargement du matériau minéral ou végétal poreux dans l'enceinte de transport, le suremballage étanche est enlevé, et le contenant ajouré chargé en matériaux minéral ou végétal poreux est placé dans l'enceinte de transport. Les vapeurs de liquide peuvent alors se diffuser librement à travers le contenant ajouré, permettant le traitement des produits végétaux disposés dans l'enceinte de transport.

D'autres caractéristiques avantageuses de l'invention ressortiront de la description détaillée qui en est donné ci-dessous, à titre indicatif et nullement limitatif, en référence aux figures annexées parmi lesquelles :
- La figure 1 est une représentation schématique d'une enceinte de transport utilisée dans le procédé de l'invention ;
- Les figures 2 et 3 sont des courbes représentant les résultats d'essais d'évaporation, pour différents matériaux poreux ;
- La figure 4 est une représentation schématique du dispositif de traitement de produits végétaux selon l'invention.

Comme indiqué plus haut, le procédé de l'invention porte sur la protection de produits végétaux en grande quantité, pendant le transport sur de longues distances et pendant une durée importante.

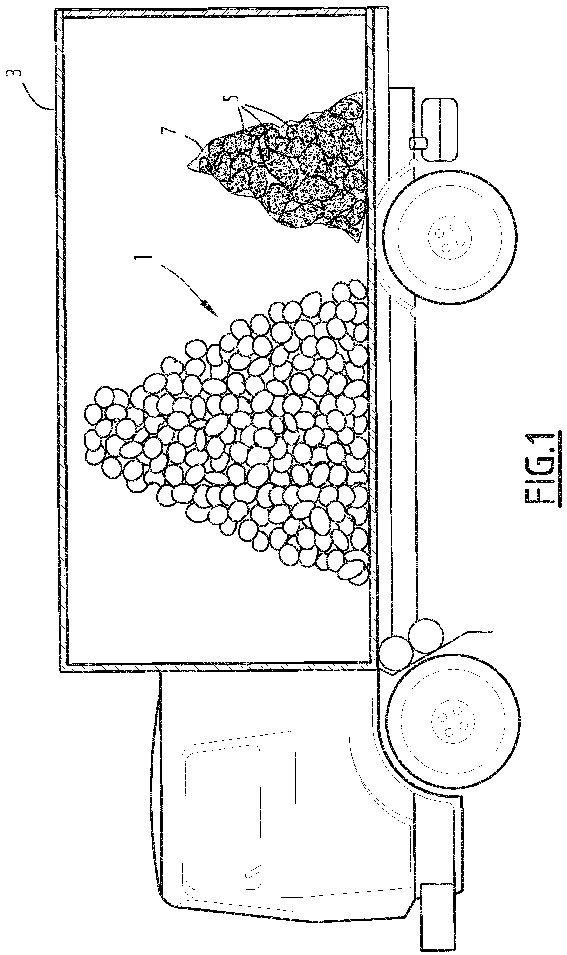

Le procédé comprend, comme illustré sur la figure 1 :
- placer une masse de produits végétaux 1 comprise entre 5 et 50 tonnes dans une enceinte 3 de grand volume ;
- transporter lesdits produits végétaux dans ladite enceinte 3 pendant une période comprise entre une semaine et deux mois, un traitement phyto-protecteur étant appliqué aux produits végétaux 1 pendant ladite période.

Selon l'invention, le traitement est appliqué en plaçant à l'intérieur de l'enceinte 3 une quantité d'un matériau minéral ou végétal poreux 5 dans lequel est absorbé un liquide contenant au moins un produit de traitement, ledit produit de traitement étant une huile essentielle ou un constituant d'une huile essentielle.

Le matériau minéral ou végétal poreux est disposé à l'intérieur d'au moins un contenant 7 ajouré, permettant une circulation d'une atmosphère interne de l'enceinte 3 à travers le contenant ajouré 7 au contact du matériau minéral ou végétal poreux 5.

L'enceinte 3 est typiquement un container ou un camion comme illustré sur la figure 1.

L'enceinte 3 est adaptée pour le transport de produits végétaux. Par exemple, l'enceinte 3 est réfrigérée, de manière à maintenir les produits végétaux à une température adaptée pour leur conservation pendant toute la période de transport.

L'enceinte 3 est de préférence étanche aux gaz, de manière à limiter les échanges entre l'atmosphère interne de l'enceinte et l'atmosphère extérieure.

L'atmosphère interne de l'enceinte 3 est typiquement de l'air. La composition de l'atmosphère interne peut évoluer dans le temps sous l'effet de l'absorption de certaines molécules présentent dans l'air par les produits végétaux et sous l'effet du dégagement d'autres molécules par les produits végétaux.

Par exemple, la composition de l'atmosphère interne de l'enceinte 3 est régulée, de manière à contrôler la concentration de certaines espèces présentent dans l'atmosphère interne (vapeur d'eau, CO₂, etc).

L'enceinte 3 présente un volume compris entre 10 et 200m³, de préférence compris entre 10 et 100 m³, et encore de préférence entre 20 et 80 m³.

Les produits végétaux transportés sont choisis dans la liste suivante : pomacées tels que les pommes, fruits à noyaux, fruits tropicaux tels que les bananes, fruits rouges tels que les cerises et les fraises, fruits des bois tels que les myrtilles, pommes de terre, oignons, ail, patates douces, agrumes.

La masse de produits végétaux à transporter est comprise entre 5 et 50 tonnes, comme indiqué ci-dessus, de préférence entre 10 et 40 tonnes et typiquement entre 20 et 30 tonnes.

La période de transport est comprise entre une semaine et deux mois, comme indiqué ci-dessus, de préférence entre 15 et 45 jours et typiquement entre 20 et 30 jours.

Le traitement phyto-protecteur appliqué pendant le transport dépend de la nature des produits végétaux. Il vise à prévenir les maladies susceptibles de toucher les produits végétaux pendant le transport, ou à soigner ces maladies. On entend ici par maladie toutes les dégradations pouvant être causées aux produits végétaux, quelle que soit leur origine : champignons, insectes, etc. Le traitement phyto-sanitaire vise également à ralentir l'évolution naturelle des produits végétaux. Par exemple, dans le cas de pommes de terre, ce traitement vise à empêcher la germination et réduire l'attaque de champignons.

Le traitement est appliqué pendant une période suffisamment longue pour assurer la protection. Le traitement est typiquement appliqué pendant toute la durée du transport. En variante, il est appliqué pendant au moins 50% de la durée du transport, encore de préférence au moins 80% de la durée du transport.

Le liquide comprend un seul produit de traitement, ou en variante comprend plusieurs produits de traitement en mélange.

Typiquement, le liquide comprend seulement le ou les produits(s) de traitement, sans solvant ni adjuvant.

En variante, le liquide comprend un solvant aqueux ou organique, dans lequel est dissout la ou les produits(s) de traitement et éventuellement un ou plusieurs adjuvant(s). Le solvant aqueux est par exemple de l'eau. Le solvant organique est par exemple un solvant du type décrit dans FR2791910 ou des glycols, di-glycols et leurs esters relatifs. Les adjuvants sont par exemple des substances aptes à véhiculer la ou les matières actives ou aptes à donner un effet de dilution.

L'huile essentielle est par exemple choisie dans le groupe formé par l'huile de menthe, l'huile de girofle, l'huile de rose, l'huile de thym, l'huile d'origan, huile d'eucalyptus, huile de cannelle, huile de menthe poivrée. Le constituant de ces huiles est choisi dans le groupe formé par le L-carvone, l'eugénol, le géraniol, le thymol, le carvacrol, la cinnamaldéhyde, l'eucalyptol, le menthol, la menthone, le limonène, le citronellol.

Le produit de traitement est un produit volatile. Sa température d'ébullition est comprise entre 60°C et 280°C à pression atmosphérique.

Le matériau minéral ou végétal poreux est choisi de manière à avoir une capacité d'absorption du liquide comprise entre 5% et 30% en poids à 20°C et à pression atmosphérique, de préférence entre 10 et 25% en poids, encore de préférence entre 10 et 20% en poids.

La capacité d'absorption de liquide est ici entendue par kg de matériaux minéral ou végétal poreux sec. En d'autres termes, une capacité d'absorption de 10% en poids signifie que 1 kg de matériaux minéral ou végétal poreux sec est susceptible d'absorber 100 grammes de liquide à 20°C et à pression atmosphérique.

Par ailleurs, le matériau minéral ou végétal poreux est choisi de telle sorte que la vitesse d'évaporation du liquide absorbé dans ledit matériau minéral ou végétal poreux est comprise entre 10 et 200 grammes par jour et par kilo de liquide absorbé, à une température adaptée pour la conservation des produits végétaux et à pression atmosphérique.

La température considérée est typiquement comprise entre 0°C et 9°C.

La température adaptée pour la conservation des fruits tropicaux et des agrumes et comprise entre 6°C et 8°C. Elle est comprise entre 4 et 9°C pour les pommes de terres. Elle est d'environ 0°C pour les oignons, l'ail, et les patates douces.

De préférence, la vitesse d'évaporation est comprise entre 20 et 150 grammes par jour et par kg de liquide absorbé, à une température adaptée pour la conservation des produits végétaux et à pression atmosphérique.

La capacité d'absorption est mesurée par pesée. Le matériau minéral ou végétal poreux est d'abord séché, par exemple dans une étuve. Il est pesé après séchage et avant absorption du liquide. Il est ensuite imbibé de liquide, par toute méthode adaptée, par exemple par immersion dans un bain de liquide. Le matériau minéral ou végétal poreux est pesé après absorption. La différence entre le poids après séchage et le poids après absorption donne la capacité d'absorption.

La vitesse d'évaporation est mesurée en effectuant des pesées, typiquement à intervalles réguliers ou non, par exemple tous les jours. Plus précisément, le matériau minéral ou végétal poreux chargé en liquide est placé dans une enceinte dont la température et la pression sont contrôlées aux valeurs indiquées ci-dessus. Le poids du matériau minéral ou végétal poreux chargé en liquide est pesé au départ, puis à intervalles réguliers ou non, par exemple chaque jour. Pour les matériaux minéraux, la différence de poids entre deux pesées consécutives correspond sensiblement à la quantité de liquide évaporée. Ces poids sont utilisés pour déterminer la vitesse d'évaporation par jour et par kg de liquide absorbé.

La capacité d'absorption et la vitesse d'évaporation dépendent entre autres de la nature du matériau minéral ou végétal poreux, de la taille des blocs constituant ce matériau, du taux de vide dans le matériau, de la taille des pores du matériau.

Ces différents paramètres peuvent être quelconques, sous réserve que le matériau minéral ou végétal poreux présente la capacité d'absorption et la vitesse d'évaporation recherchée.

Typiquement, le matériau minéral ou végétal poreux est choisi sur la base de tests permettant de vérifier qu'il possède les propriétés attendues.

Typiquement, le matériau minéral ou végétal poreux est choisi par exemple dans la liste suivante : pierre ponce, pouzzolane, billes d'argiles, cellulose, écorces de pin.

On entend ici par pierre ponce une roche volcanique très poreuse de faible densité, inférieure à 1.

Tous les types de pierre ponce sont susceptibles d'être utilisées ici, sous réserve de présenter la capacité d'absorption et la vitesse d'évaporation attendue.

Pour ce faire, le matériau minéral ou végétal poreux se présente typiquement sous la forme de blocs de taille comprise entre 0,5 et 10 cm, de préférence entre 0,5 et 5 cm, encore de préférence entre 0,5 et 3 cm.

On entend ici par taille la plus grande dimension du bloc.

Si les blocs sont trop grands, ils ne peuvent pas être entièrement imbibés par le liquide. Si les blocs sont trop petits, la circulation d'air entre les blocs est limitée. Les blocs ont tendance à être plus poussiéreux et ils peuvent passer trop facilement au travers du contenant ajouré.

Le fait que le matériau minéral ou végétal poreux soit divisé en blocs permet d'offrir une grande surface d'échange avec l'atmosphère interne de l'enceinte.

Avantageusement, le procédé comporte une étape de chargement du matériau minéral ou végétal poreux 5 en ledit liquide.

Cette étape intervient avant le transport des produits végétaux.

L'étape de chargement comprend les sous-étapes suivantes :
- séchage du matériau minéral ou végétal poreux 5 ;
- imprégnation du liquide dans le matériau minéral ou végétal poreux 5.

Le séchage est effectué par passage d'air à travers le matériau minéral ou végétal poreux, ou par chauffage du matériau minéral ou végétal poreux.

Le séchage permet d'augmenter la quantité de liquide stockée dans le matériau minéral ou végétal poreux.

Par ailleurs, si le matériau est mal séché, il va relarguer de la vapeur d'eau en plus de la vapeur de produit de traitement, ce qui n'est pas forcément une bonne chose.

Une pierre ponce sèche retient environ 3 fois plus d'huile de menthe qu'une pierre ponce humide.

L'imprégnation est effectuée par exemple en plongeant les blocs dans un bain de liquide, et en remuant les blocs pour s'assurer que chaque bloc est plongé dans le liquide pendant une durée suffisante pour permettre une imprégnation complète.

Le matériau minéral ou végétal poreux est disposé dans un ou plusieurs contenants ajourés 7, en fonction de la masse de matériaux minéral ou végétal poreux à conditionner.

Typiquement, le ou chaque contenant ajouré 7 contient entre 1 et 20kg de matériau minéral ou végétal poreux, de préférence entre 5 et 15 kg, et typiquement 10 kg.

Le fait de disposer une quantité raisonnable de matériau minéral ou végétal poreux dans un même contenant ajouré 7 permet de faciliter la mise en contact de l'atmosphère interne de l'enceinte 3 avec le matériau minéral ou végétal poreux. Si le volume de matériau minéral ou végétal poreux disposé à l'intérieur d'un même contenant ajouré 7 est trop important, l'atmosphère interne pénètre difficilement jusqu'aux blocs de matériau minéral ou végétal poreux situés au centre du contenant ajouré.

Le matériau minéral ou végétal poreux 5 conditionné dans un même contenant ajouré 7 contient entre 0,1 et 6 kg de liquide au total, de préférence entre 0,5 et 4 kg de liquide au total, encore de préférence entre 1 et 2 kg de liquide au total.

On entend ici par ajouré le fait que le contenant présente une paroi ayant des zones vides, dépourvues de matière, à travers lesquelles l'atmosphère peut circuler entre l'intérieur et l'extérieur du contenant ajouré.

Typiquement, le ou chaque contenant ajouré 7 présente un taux de vide par unité de surface supérieur à 20%, de préférence supérieur à 30% et encore de préférence supérieur à 50%. On entend par taux de vide par unité de surface le rapport de la surface totale des zones vides de la paroi du contenant ajouré sur la surface totale de la paroi de ce contenant ajouré.

En d'autres termes, le taux de vide correspond, pour 1 m² de paroi du contenant ajouré, à la surface totale de toutes les zones vides.

Le taux de vide est typiquement déterminé par calcul, en considérant une surface unitaire du contenant ajouré. La surface occupée par la matière pleine est déterminée, en utilisant des données caractéristiques du contenant ajouré ou graphiquement sur une image du contenant ajouré. La surface vide est ensuite calculée, en faisant la différence entre la surface unitaire et la surface occupée par la matière pleine. Le taux de vide est calculé en faisant le rapport entre la surface vide et la surface unitaire.

Le taux de vide pour un exemple de sac de jute est de 0,36.

Pour déterminer ce taux de vide, on considère un carré du sac de 10 cm de côté. La jute comporte 40 brins de fils sur 10 cm de largeur, et le tissage est à angles droits. Le carré comporte donc 80 brins de fils, chacun d'une longueur de 10 cm et d'une épaisseur 1 mm.

La surface unitaire SU est ici de 10x10 = 100 cm².

La surface SP occupée par la matière pleine, c'est-à-dire les fils tissés, est calculée comme suit :
SP = 80x10x0,1-(40x40x0,1x0,1) = 64 cm² (surface totale occupée par les brins moins la surface où ils se superposent).

La surface vide SV est égale à 100 - 64 = 36 cm².

Le taux de vide SV/SU est égal à 36/100 = 0,36.

Le ou chaque contenant ajouré est choisi dans la liste suivante : sac en jute, sac en maille, filet, caisse.

La quantité de matériau minéral ou végétal poreux chargée dans l'enceinte de transport est typiquement choisi de la manière suivante.

Les données d'entrée sont la durée du transport, et donc la durée du traitement, la quantité de produits végétaux à transporter, le type de matériau minéral ou végétal poreux utilisé, et le type de liquide absorbé dans le matériau minéral ou végétal poreux.

Ces données permettent de déterminer qu'elle est la concentration surfacique en produit de traitement à obtenir à la surface des produits végétaux de manière à ce que le traitement soit efficace.

Ceci permet d'estimer ensuite la quantité de liquide à évaporer par jour pour maintenir une telle concentration sensiblement constante pendant toute la durée du trajet.

La quantité journalière à évaporer est utilisée pour déterminer la quantité de matériaux de minéral ou végétal poreux à prévoir à l'intérieur de l'enceinte de transport.

Des essais ont été effectués pour évaluer la vitesse d'évaporation de différents matériaux poreux.

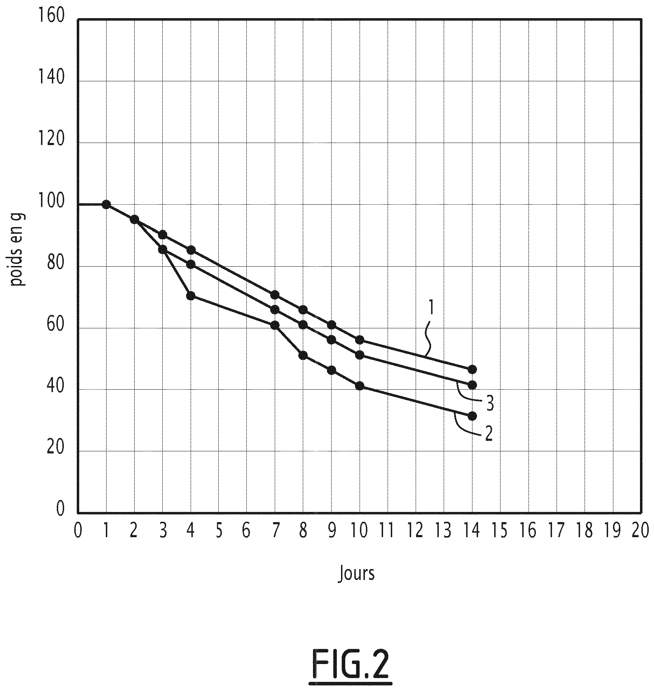

Au cours d'une première série d'essais, dont les résultats sont représentés sur la figure 2, trois matériaux poreux ont été testés : la pierre ponce, la pouzzolane et les billes d'argile. Pour chaque essai, un sac de jute de 2 dm³ était entièrement rempli avec le matériau poreux imbibé au total de 100g de carvone. Les dimensions du sac chargé étaient de 6x28x22 cm. Le poids du sac, au départ, était de 1040 g pour la pierre ponce, 2390 g pour la pouzzolane et 1360 g pour les billes d'argile.

Chaque sac était maintenu dans un réfrigérateur, à une température de 7,5°C, et pesé quotidiennement.

La figure 2 représente le poids restant de carvone pour chaque sac (pierre ponce courbe 1, pouzzolane courbe 2, billes d'argile courbe 3).

La figure 2 met en évidence que, dans les trois cas, l'évaporation de carvone est régulière pendant 14 jours. Elle est pratiquement linéaire entre le jour 2 et le jour 10, notamment pour la pierre ponce. L'évaporation se réduit ensuite entre le jour 10 et le jour 14.

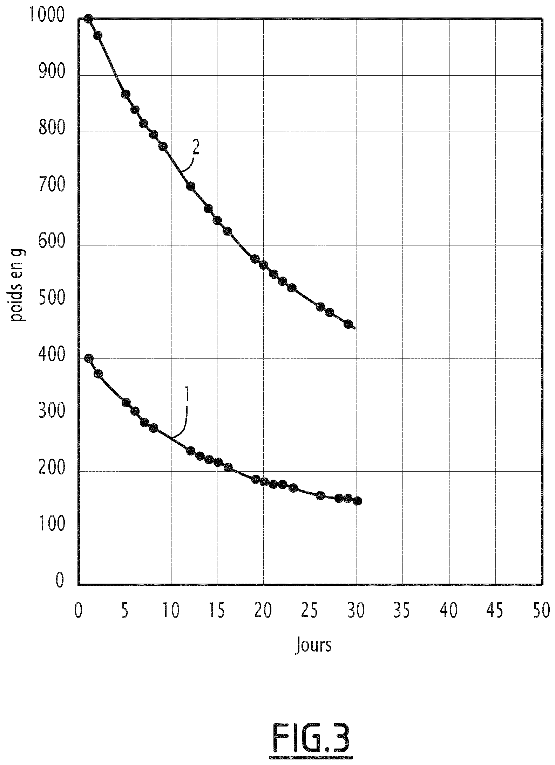

Au cours d'une seconde série d'essais, dont les résultats sont représentés sur la figure 3, deux quantités différentes de pierre ponce ont été testées.

Le premier essai (courbe 1) a été effectué en chargeant dans un sac de jute avec 3.76 kg de pierre ponce, imbibés de 400g de carvone.

Le second essai (courbe 2) a été effectué en chargeant dans un sac de jute avec 10 kg de pierre ponce, imbibés de 1000g de carvone.

Chaque sac était maintenu dans un réfrigérateur, à une température de 7,5°C, et pesé régulièrement.

La figure 3 représente le poids restant de carvone pour chaque sac.

La figure 3 met en évidence que, dans les deux cas, l'évaporation de carvone est régulière.

Pour le premier essai, elle est pratiquement linéaire entre le jour 1 et le jour 8. L'évaporation se réduit ensuite progressivement entre le jour 8 et le jour 30.

Pour le second essai, la courbe est pratiquement linéaire entre le jour 1 et le jour 12. L'évaporation se réduit ensuite progressivement entre le jour 13 et le jour 30, mais reste à un niveau élevé.

Un exemple d'application va maintenant être détaillé.

Une quantité de pommes de terre comprise entre 20 et 30 tonnes est transportée pendant une période de 15 à 20 jours, un traitement avec de l'huile de menthe étant appliqué pendant le trajet.

La concentration visée pour l'huile de menthe à la surface des pommes de terre est comprise entre 70 et 100 ppm. Pour maintenir une telle concentration, il est nécessaire d'évaporer environ 100 grammes d'huile de menthe par jour.

Le matériau minéral ou végétal poreux utilisé est de la pierre ponce. De manière à obtenir la capacité d'évaporation souhaitée, il est prévu dans l'enceinte de transport recevant les pommes de terre deux sacs de 10 kg de pierre ponce, avec 1kg d'huile de menthe absorbée dans chaque lot de 10kg de pierre ponce. Les pierres ponce sont conditionnées dans des sacs en jute.

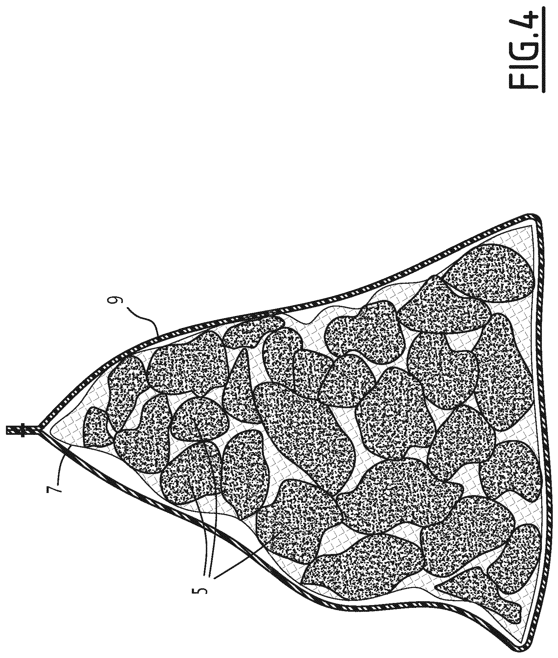

Selon un aspect avantageux de l'invention illustré sur la figure 4, pour faciliter la conservation du matériau minéral ou végétal poreux chargé en liquide avant chargement dans l'enceinte de transport, le contenant ajouré chargé en matériaux minéral ou végétal poreux imbibé de liquide est placé dans un suremballage étanche vis-à-vis du liquide et étanche vis-à-vis des vapeurs de chaque huile essentielle.

On constitue ainsi un ensemble comprenant typiquement :
- entre 1 et 20kg d'un matériaux minéral ou végétal poreux 5 ;
- entre 0,1kg et 6kg d'un liquide absorbé dans le matériau minéral ou végétal poreux, le liquide contenant au moins un produit de traitement, le produit de traitement étant une huile essentielle ou un constituant d'une huile essentielle, le matériau minéral ou végétal poreux ayant une capacité d'absorption du liquide comprise entre 5% et 30% en poids à 20°C, la vitesse d'évaporation du liquide absorbée dans le matériau minéral ou végétal poreux étant comprise entre 10 et 200 grammes par jour et par kg de liquide absorbé à une température adaptée pour la conservation des produits végétaux et à pression atmosphérique;

- un contenant 7 ajouré à l'intérieur duquel le matériau minéral ou végétal poreux est disposé, le contenant ajouré permettant une circulation d'une atmosphère à travers le contenant ajouré au contact du matériau minéral ou végétal poreux ;
- un suremballage 9 étanche vis-à-vis du liquide et des vapeurs de produit de traitement, dans lequel est placé le contenant ajouré 7 contenant le matériau minéral ou végétal poreux 5.

Cet ensemble permet, après que le liquide ait été absorbé par le matériaux minéral ou végétal poreux 5 et que celui-ci ait été conditionné dans le contenant ajouré 7, de le conserver avant chargement dans l'enceinte de transport 3.

Le suremballage étanche 9 est par exemple un sac en polyéthylène haute densité, en polypropylène ou en aluminium.

Le matériau minéral ou végétal poreux et le liquide sont comme décrit ci-dessus. Les quantités de matériau minéral ou végétal poreux et de liquide par contenant ajouré sont comme indiqué ci-dessus.

Le contenant ajouré est comme décrit ci-dessus.

## Revendications

1. Procédé de protection de produits végétaux pendant le transport, le procédé comprenant :
- placer une masse de produits végétaux (1) comprise entre 5 et 50 tonnes dans une enceinte (3) de grand volume, l'enceinte (3) présente un volume compris entre 10 et 200 m³ ;
- transporter les dits produits végétaux (1) dans ladite enceinte (3) pendant une période comprise entre une semaine et deux mois, un traitement phytoprotecteur étant appliqué aux produits végétaux (1) pendant au moins une partie de ladite période ; le traitement étant appliqué en plaçant à l'intérieur de ladite enceinte (3) une quantité d'un matériau minéral ou végétal poreux (5) dans lequel est absorbé un liquide contenant au moins un produit de traitement, le produit de traitement étant une huile essentielle ou un constituant d'une huile essentielle; le matériau minéral ou végétal poreux (5) ayant une capacité d'absorption du liquide comprise entre 5% et 30% en poids à 20°C, mesurée par pesée; la vitesse d'évaporation du liquide absorbé dans le matériau minéral ou végétal poreux (5) étant comprise entre 10 et 200 g par jour et par kg de liquide absorbé à une température adaptée pour la conservation des produits végétaux et à pression atmosphérique, mesurée par pesée; le matériau minéral ou végétal poreux (5) étant disposé à l'intérieur d'au moins un contenant ajouré (7) permettant une circulation d'une atmosphère interne de l'enceinte (3) à travers le contenant ajouré (7) au contact du matériau minéral ou végétal poreux (5).

2. Procédé de protection de produits végétaux pendant le transport selon la revendication 1, dans lequel l'enceinte (3) est un conteneur ou un camion.

3. Procédé de protection de produits végétaux pendant le transport selon la revendication 1 ou 2, dans lequel les produits végétaux (1) sont choisis dans la liste suivante : pomacées tels que les pommes, fruits à noyaux, fruits tropicaux tels que les bananes, fruits rouges tels que les cerises et les fraises, fruits des bois tels que les myrtilles, pommes de terre, oignons, ail, patates douces, agrumes.

4. Procédé de protection de produits végétaux pendant le transport selon l'une quelconque des revendications précédentes, dans lequel le ou chaque produit de traitement est choisi dans la liste suivante : l'huile essentielle : huile de menthe, huile de girofle, huile de rose, huile de thym, huile d'origan ; huile d'eucalyptus, huile de cannelle, huile de menthe poivrée. constituant d'une huile essentielle : L-carvone, eugénol, géraniol, thymol, carvacrol, la cinnamaldéhyde, l'eucalyptol, le menthol, la menthone, le limonène, le citronellol.

5. Procédé de protection de produits végétaux pendant le transport selon l'une quelconque des revendications précédentes, dans lequel le matériau minéral ou végétal poreux (5) est choisi dans la liste suivante : pierre ponce, pouzzolane, billes d'argile, cellulose, écorces de pin.

6. Procédé de protection de produits végétaux pendant le transport selon l'une quelconque des revendications précédentes, dans lequel le ou chaque contenant ajouré (7) présente un taux de vide par unité de surface du contenant ajouré (7) supérieur à 20%, déterminé par calcul.

7. Procédé de protection de produits végétaux pendant le transport selon l'une quelconque des revendications précédentes, dans lequel le ou chaque contenant ajouré (7) est choisi dans la liste suivante : sac en jute, sac en maille, filet, caisse.

8. Procédé de protection de produits végétaux pendant le transport selon l'une quelconque des revendications précédentes, dans lequel le ou chaque contenant ajouré (7) contient entre 1 et 20 kg de matériau minéral ou végétal poreux (5).

9. Procédé de protection de produits végétaux pendant le transport selon l'une quelconque des revendications précédentes, dans lequel le matériau minéral ou végétal poreux (5) est divisé en blocs de taille comprise entre 0,5 et 10 cm.

10. Procédé de protection de produits végétaux pendant le transport selon l'une quelconque des revendications précédentes, dans lequel le procédé comporte une étape de chargement du matériau minéral ou végétal poreux (5) en ledit liquide, l'étape de chargement comprenant les sous-étapes suivantes :
- séchage du matériau minéral ou végétal poreux (5) ;
- imprégnation du liquide dans le matériau minéral ou végétal poreux (5).

11. Dispositif pour le traitement de produits végétaux pendant un transport de longue durée, entre une semaine et deux mois, dans une enceinte (3) de grand volume compris entre 10 et 200 m³, le dispositif comprenant :
- entre 1 et 20 kg d'un matériau minéral ou végétal poreux (5);
- entre 0,1 kg et 6 kg d'un liquide absorbé dans le matériau minéral ou végétal poreux (5), le liquide contenant au moins un produit de traitement, le produit de traitement étant une huile essentielle ou un constituant d'une huile essentielle, le matériau minéral ou végétal poreux (5) ayant une capacité d'absorption du liquide comprise entre 5% et 30% en poids à 20°C mesurée par pesée, la vitesse d'évaporation du liquide absorbé dans le matériau minéral ou végétal poreux (5) étant comprise entre 10 et 200 g par jour et par kg de liquide absorbé à une température adaptée pour la conservation des produits végétaux et à pression atmosphérique, mesurée par pesée;
- un contenant ajouré (7) à l'intérieur duquel le matériau minéral ou végétal poreux (5) est disposé, le contenant ajouré (7) permettant une circulation d'une atmosphère à travers le contenant ajouré (7) au contact du matériau minéral ou végétal poreux (5);
- un suremballage (9) étanche vis-à-vis dudit liquide et des vapeurs du produit de traitement, dans lequel est placé le contenant ajouré (7) contenant le matériau minéral ou végétal poreux (5).

## Patentansprüche

1. Verfahren zum Schutz von Pflanzenprodukten während des Transports, wobei das Verfahren Folgendes umfasst:
- Platzieren einer Masse von Pflanzenprodukten (1) im Bereich zwischen 5 und 50 Tonnen in einen Behälter (3) mit großem Volumen, wobei der Behälter (3) ein Volumen im Bereich zwischen 10 und 200 m³ aufweist;
- Transportieren der Pflanzenprodukte (1) in dem Behälter (3) während eines Zeitraums im Bereich zwischen einer Woche und zwei Monaten, wobei eine Pflanzenschutzmittelbehandlung auf die Pflanzenprodukte (1) während mindestens eines Teils des Zeitraums angewendet wird;
wobei die Behandlung angewendet wird, indem in das Innere des Behälters (3) eine Menge eines porösen mineralischen oder pflanzlichen Materials (5) platziert wird, in das eine Flüssigkeit absorbiert wird, die mindestens ein Behandlungsprodukt enthält, wobei das Behandlungsprodukt ein ätherisches Öl oder einen Bestandteil eines ätherischen Öls ist;
wobei das poröse mineralische oder pflanzliche Material (5) eine Flüssigkeitsabsorptionskapazität im Bereich zwischen 5 Gew% und 30 Gew% bei 20 °C aufweist, gemessen durch Wägung; wobei die Verdunstungsrate der Flüssigkeit, die in dem porösen mineralischen oder pflanzlichen Material (5) absorbiert ist, im Bereich zwischen 10 und 200 g pro Tag und pro kg absorbierter Flüssigkeit bei einer Temperatur liegt, die für die Konservierung der Pflanzenprodukte und unter Atmosphärendruck ausgelegt ist, gemessen durch Wägung;
wobei das poröse mineralische oder pflanzliche Material (5) im Inneren mindestens eines perforierten Behältnisses (7) angeordnet ist, das eine Zirkulation einer inneren Atmosphäre des Behälters (3) durch das perforierte Behältnis (7) in Kontakt mit dem porösen mineralischen oder pflanzlichen Material (5) ermöglicht.

2. Verfahren zum Schutz von Pflanzenprodukten während des Transports nach Anspruch 1, wobei der Behälter (3) ein Container oder ein Lastwagen ist.

3. Verfahren zum Schutz von Pflanzenprodukten während des Transports nach Anspruch 1 oder 2, wobei die Pflanzenprodukte (1) aus der folgenden Liste ausgewählt sind: Kernobst wie z. B. Äpfel, Steinobst, tropische Früchte wie Bananen, rote Früchte wie Kirschen und Erdbeeren, Waldfrüchte wie Heidelbeeren, Kartoffeln, Zwiebeln, Knoblauch, Süßkartoffeln, Zitrusfrüchte.

4. Verfahren zum Schutz von Pflanzenprodukten während des Transports nach einem der vorhergehenden Ansprüche, wobei das oder jedes Behandlungsprodukt aus der folgenden Liste ausgewählt ist:
ätherisches Öl: Pfefferminzöl, Nelkenöl, Rosenöl, Thymianöl, Oreganoöl; Eukalyptusöl, Zimtöl, Pfefferminzöl.
Bestandteile eines ätherischen Öls: L-Carvon, Eugenol, Geraniol, Thymol, Carvacrol, Zimtaldehyd, Eucalyptol, Menthol, Menthon, Limonen, Citronellol.

5. Verfahren zum Schutz von Pflanzenprodukten während des Transports nach einem der vorhergehenden Ansprüche, wobei das poröse mineralische oder pflanzliche Material (5) aus der folgenden Liste ausgewählt ist: Bimsstein, Puzzolan, Tonkugeln, Cellulose, Kiefernrinde.

6. Verfahren zum Schutz von Pflanzenprodukten während des Transports nach einem der vorhergehenden Ansprüche, wobei das oder jedes perforierte Behältnis (7) einen Porenanteil pro Flächeneinheit des perforierten Behältnisses (7) von mehr als 20 % aufweist, bestimmt durch Berechnung.

7. Verfahren zum Schutz von Pflanzenprodukten während des Transports nach einem der vorhergehenden Ansprüche, wobei das oder jedes perforierte Behältnis (7) aus der folgenden Liste ausgewählt ist: Jutesack, Netzsack, Netz, Kiste.

8. Verfahren zum Schutz von Pflanzenprodukten während des Transports nach einem der vorhergehenden Ansprüche, wobei das oder jedes perforiert Behältnis (7) zwischen 1 und 20 kg poröses mineralisches oder pflanzliches Material (5) enthält.

9. Verfahren zum Schutz von Pflanzenprodukten während des Transports nach einem der vorhergehenden Ansprüche, wobei das poröse mineralische oder pflanzliche Material (5) in Blöcke mit einer Größe im Bereich zwischen 0,5 und 10 cm unterteilt ist.

10. Verfahren zum Schutz von Pflanzenprodukten während des Transports nach einem der vorhergehenden Ansprüche, wobei das Verfahren einen Schritt des Ladens des porösen mineralischen oder pflanzlichen Materials (5) in die Flüssigkeit umfasst, wobei der Schritt des Ladens die folgenden Teilschritte umfasst:
- Trocknen des porösen mineralischen oder pflanzlichen Materials (5);
- Imprägnieren des porösen mineralischen oder pflanzlichen Materials (5) mit der Flüssigkeit.

11. Vorrichtung zur Behandlung von Pflanzenprodukten während eines Transports von langer Dauer, zwischen einer Woche und zwei Monaten, in einem Behälter (3) mit großem Volumen im Bereich zwischen 10 und 200 m³, wobei die Vorrichtung Folgendes umfasst:
- zwischen 1 und 20 kg eines porösen mineralischen oder pflanzlichen Materials (5);
- zwischen 0,1 kg und 6 kg einer Flüssigkeit, die in dem porösen mineralischen oder pflanzlichen Material (5) absorbiert ist, wobei die Flüssigkeit mindestens ein Behandlungsprodukt enthält, wobei das Behandlungsprodukt ein ätherisches Öl oder ein Bestandteil eines ätherischen Öls ist, wobei das poröse mineralische oder pflanzliche Material (5) eine Flüssigkeitsabsorptionskapazität aufweist, die im Bereich zwischen 5 Gew% und 30 Gew% bei 20 °C liegt, gemessen durch Wägung, wobei die Verdunstungsrate der Flüssigkeit, die in dem porösen mineralischen oder pflanzlichen Material (5) absorbiert ist, im Bereich zwischen 10 und 200 g pro Tag und pro kg absorbierter Flüssigkeit bei einer Temperatur liegt, die für die Konservierung der Pflanzenprodukte und unter Atmosphärendruck ausgelegt ist, gemessen durch Wägung;
- ein perforiertes Behältnis (7), in dessen Inneren das poröse mineralische oder pflanzliche Material (5) angeordnet ist, wobei das perforierte Behältnis (7) eine Zirkulation einer Atmosphäre durch das perforierte Behältnis (7) in Kontakt mit dem porösen mineralischen oder pflanzlichen Material (5) ermöglicht;
- eine Überverpackung (9), die gegen die Flüssigkeit und die Dämpfe des Behandlungsprodukts dicht ist, in die das perforierte Behältnis (7) platziert ist, das das poröse mineralische oder pflanzliche Material (5) enthält.

## Claims

1. A process of vegetable products protection during transportation, the process comprising:
- placing a mass of vegetable products (1) of between 5 and 50 tons in a large volume enclosure (3), the enclosure (3) has a volume of between 10 and 200 m³;
- transporting said vegetable products (1) in said enclosure (3) for a period of between one week and two months, a phyto-protective treatment being applied to the vegetable products (1) during at least part of said period;
the treatment being applied by placing a quantity of a porous mineral or vegetable material (5) wherein a liquid containing at least one treatment product is absorbed inside said enclosure (3), the treatment product being an essential oil or a constituent of an essential oil;
the porous mineral or vegetable material (5) having a liquid absorption capacity of between 5% and 30% by weight at 20° C, measured by weighing;
the evaporation rate of the liquid absorbed in the porous mineral or vegetable material (5) being between 10 and 200 g per day and per kg of absorbed liquid at a temperature suitable for the preservation of the vegetable products and at atmospheric pressure, measured by weighing;
the porous mineral or vegetable material (5) being arranged inside at least one openwork container (7) allowing an internal atmosphere of the enclosure (3) to circulate through the openwork container (7) in contact with the porous mineral or vegetable material (5).

2. The vegetable products protection during transportation process according to claim 1, wherein the enclosure (3) is a container or a truck.

3. The vegetable products protection during transportation process according to claim 1 or 2, wherein the vegetable products (1) are selected from the following list: pomaceous plants such as apples, stone fruits, tropical fruits such as bananas, red fruits such as cherries and strawberries, forest fruits such as blueberries, potatoes, onions, garlic, sweet potatoes, citrus.

4. The vegetable products protection during transportation process according to any of the preceding claims, wherein the or each treatment product is selected from the following list:
essential oil: mint oil, clove oil, rose oil, thyme oil, oregano oil; eucalyptus oil, cinnamon oil, peppermint oil;
constituent of an essential oil: L-carvone, eugenol, geraniol, thymol, carvacrol, cinnamaldehyde, eucalyptol, menthol, menthone, limonene, citronellol.

5. The vegetable products protection during transportation process according to any of the preceding claims, wherein the porous mineral or vegetable material (5) is selected from the following list: pumice, pozzolan, clay balls, cellulose, pine bark.

6. The vegetable products protection during transportation process according to any one of the preceding claims, wherein the or each openwork container (7) has a void ratio per unit area greater than 20%, determined by calculation.

7. The vegetable products protection during transportation process according to any one of the preceding claims, wherein the or each openwork container (7) is selected from the following list: jute bag, mesh bag, net, crate.

8. The vegetable products protection during transportation process according to any one of the preceding claims, wherein the or each openwork container (7) contains between 1 and 20 kg of porous mineral or vegetable material (5).

9. The vegetable products protection during transportation process according to any of the preceding claims, wherein the porous mineral or vegetable material (5) is divided into blocks sized between 0.5 and 10 cm.

10. The vegetable products protection during transportation process according to any of the preceding claims, wherein the process comprises a step of loading the porous mineral or vegetable material (5) with said liquid, the loading step comprising the following sub-steps:
- drying of the porous mineral or vegetable material (5);
- impregnation of the liquid in the porous mineral or vegetable material (5).

11. A device for treating vegetable products during long-term transport, between one week and two months, in a large-volume enclosure (3) of between 10 and 200 m³, the device comprising:
- between 1 and 20 kg of a porous mineral or vegetable material (5);
- between 0.1 kg and 6 kg of a liquid absorbed into the porous mineral or vegetable material (5), the liquid containing at least one treatment product, the treatment product being an essential oil or a constituent of an essential oil
the porous mineral or vegetable material (5) having a liquid absorption capacity of between 5% and 30% by weight at 20° C measured by weighing, the evaporation rate of the liquid absorbed in the porous mineral or vegetable material (5) being between 10 and 200 g per day and per kg of absorbed liquid at a temperature suitable for preserving vegetable products and at atmospheric pressure, measured by weighing;
- an openwork container (7) inside which the porous mineral or vegetable material (5) is arranged, the openwork container (7) allowing the atmosphere to circulate through the openwork container (7) in contact with the porous mineral or vegetable material (5);
- an overpack (9) that is sealed against said liquid and the vapors of the treatment product, in which the openwork container (7) containing the porous mineral or vegetable material (5) is placed.
